# EUROPEAN PATENT SPECIFICATION

(11) **EP 2 985 508 B1**
(45) Date of publication and mention of the grant of the patent: **06.05.2020**
(21) Application number: 13881538.6
(22) Date of filing: 28.11.2013
(51) Int. Cl.: F17C 13/08, B65G 67/24, F17C 13/00, B60P 3/22

(54) **REMOTE PLACE NATURAL GAS SUPPLY STATION USING LNG TANK CONTAINER AND NATURAL GAS SUPPLY METHOD USING SAME**
FERNORT-ERDGASVERSORGUNGSSTATION MIT LNG-TANKS UND ERDGASVERSORGUNGSVERFAHREN DAMIT
STATION D'ALIMENTATION EN GAZ NATUREL ÉLOIGNÉE UTILISANT UN CONTENEUR-CITERNE DE GNL ET PROCÉDÉ D'ALIMENTATION EN GAZ NATUREL UTILISANT CETTE DERNIÈRE

(30) Priority: 11.04.2013 KR 20130039921
(43) Date of publication of application: 17.02.2016
(73) Proprietor: Korea Gas Corporation, Seongnam-si, Gyeonggi-do 463-754 (KR)
(72) Inventor: OH, Young Sam, Incheon 406-840 (KR); KIM, Ki-Dong, Incheon 404-170 (KR); HONG, Seong Ho, Gwacheon-si Gyeonggi-do 427-732 (KR); HA, Jong-Mann, Ansan-si Gyeonggi-do 426-750 (KR); CHOI, Kyoung-Shik, Ansan-si Gyeonggi-do 425-882 (KR); KIM, Hyoung Sik, Uiwang-si Gyeonggi-do 437-080 (KR)
(74) Representative: Cabinet Laurent & Charras
(86) International application number: PCT/KR2013/010890
(87) International publication number: WO 2014/168310

(56) References cited:
- WO-A2-2012/154015
- AT-B- 360 968
- JP-A- H08 508 327
- JP-A- 2006 273 569
- JP-U- H0 391 251
- KR-A- 20110 062 105
- KR-A- 20120 084 105
- US-A1- 2009 115 190
- US-A1- 2010 176 124
- US-A1- 2010 176 124

## Description

### BACKGROUND OF THE INVENTION

### Field of the Invention

The present invention relates to a remote natural gas supply station using a LNG tank container and a method for supplying natural gas using the same, and more particularly, to a natural gas supply station that is capable of more conveniently and safely supplying natural gas to a consumer in a remote area to which a natural gas piping network is not directly connected and a method for supplying the natural gas using the same.

### Description of the Related Art

In general, there are two following methods for supplying natural gas to a consumer. First, there is a method for directly supplying the natural gas to the customer through a natural gas piping network. Second, there is a method for supplying liquefied natural gas (LNG) to the customer through a tank lorry. The second method is generally used when the natural gas is supplied to a remote area to which the natural gas piping network is not directly connected.
US 2014/0069931 A1 (WO 2012/154105) discloses a floating structure including a storage tank carrying apparatus and a floater. In an example, the storage tank carrying apparatus is installed on the floater. And the storage tank carrying apparatus includes a loading table and a rail. The loading table is lifted up and down by an elevating unit. The rail is provided on the loading table along a moving direction of a storage tank. The storage tank is loaded into a cart. The cart is installed to be movable along the rail.
US 2009/0115190 A1 relates to systems and methods for producing, shipping, distributing, and storing hydrogen.

However, the second method has limitations in that a stationary storage tank needs to be separately installed in the remote area, and the stationary storage tank needs to be periodically filled with liquefied natural gas. That is, since the tank lorry may not be installed in the remote area so as to be used as a storage facility, the separate stationary storage tank that is distinguished from the tank lorry needs to be separately installed in the remote area. In other words, to supply the natural gas to the remote area to which the natural gas piping network is not directly connected, the stationary storage tank (and necessary facilities) may be separately installed in the remote area, and then the stationary storage tank needs to be periodically filled with the liquefied natural gas.

As described above, in case of the second method, since the stationary storage tank is separately installed for each remote area and then periodically filled with the liquefied natural gas, it takes a long time to fill the liquefied natural gas, and also, the transportation and supply of the liquefied natural gas (or natural gas) cause a lot of inconvenience. Furthermore, the installation of the stationary storage tank requires a lot of costs. Also, while the liquefied natural gas is filled into the stationary storage tank, boil-off gas is generally generated due to external heat. The boil-off gas is usually discharged to the atmosphere. Thus, in case of the second method, the discharge of the boil-off gas may cause the loss of natural gas or the risk of fire.

### SUMMARY OF THE INVENTION

An aspect of the present invention provides a natural gas supply station using a LNG tank container, which is capable of more conveniently and safely supplying natural gas to a consumer in a remote area to which a natural gas piping network is not directly connected and a method for supplying the natural gas using the same.

According to an aspect of the present invention, there is provided a natural gas supply station as in independent claim 1.

According to another aspect of the present invention, there is provided a method for supplying natural gas, as in independent claim 8.

In the natural gas supply station using the LNG tank container and the method for supplying the natural gas according to the present invention, the natural gas may be conveniently and directly supplied to the consumer in the remote area by only transporting the LNG tank container on the installation structure and installing the LNG tank container on the installation structure. Furthermore, since the LNG tank container is loaded from the transport unit to the installation structure in the sliding manner, the cost may be reduced, and the management may be easy.

### BRIEF DESCRIPTION OF THE DRAWINGS

FIG. 1 is a perspective view illustrating a natural gas supply station according to Embodiment 1 of the present invention;
FIGS. 2 to 5 are perspective views for explaining an operation of the natural gas supply station of FIG. 1; and
FIG. 6 is a perspective view illustrating a natural gas supply station according to Embodiment 2 of the present invention.

### DETAILED DESCRIPTION OF THE PREFERRED EMBODIMENT

Preferred embodiments of the present invention will be described below in more detail with reference to the accompanying drawings. However, the present invention is not restricted or limited to the embodiments below.

### Embodiment 1

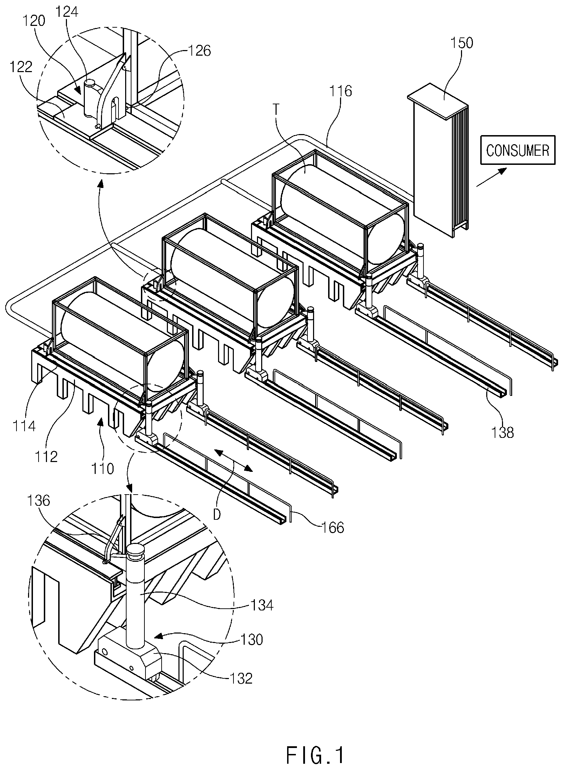

A natural gas supply station according to Embodiment 1 of the present invention has basic characteristics in that a LNG tank container in which liquefied natural gas is stored is provided and installed to directly supply the natural gas from the LNG tank container to a consumer. For this, the natural gas supply station according to Embodiment 1 of the present invention includes an installation structure 110 and a gas vaporizer 150 as illustrated in FIG. 1. For reference, FIG. 1 is a perspective view illustrating the natural gas supply station according to Embodiment 1 of the present invention.

First, the installation structure 110 will be described. In general, the installation structure 110 is a structure for installing the LNG tank container T in a remote area to which a piping network is not connected. That is, the installation structure 110 is a structure that is installed in the remote area to stably maintain the LNG tank container T. However, it is difficult to unload the LNG tank container T onto the installation structure 110. For example, a crane device may be used to unload the LNG tank container T. That is, the LNG tank container T may be unloaded from a transport unit V such as a trailer truck onto the installation structure 110 by using the crane device. However, the crane device generally requires a lot of costs, and management thereof is difficult.

To solve the above-described unloading limitations, the natural gas supply station according to the present embodiment unloads the LNG tank container T from the transport unit V onto the installation structure 110 in a sliding manner. That is, the natural gas supply station according to the present embodiment pushes or pulls the LNG tank container T to unload or load the LNG tank container T between the transport unit V and the installation structure 110.

More specifically, the installation structure 110 of the natural gas supply station according to the present embodiment includes a moving part 120 to unload the LNG tank container T in the sliding manner. The moving part 120 reciprocatively moves in a direction D in which the LNG tank container T is unloaded (or unloaded and loaded) from the transport unit V. The moving part 120 is separably fixed to the LNG tank container T to move together with the LNG tank container T. That is, the moving part 120 is separably fixed to the LNG tank container T to move the LNG tank container T loaded on the transport unit V to the installation structure 110 or move the LNG tank container T loaded on the installation structure 110 to the transport unit V.

Also, the natural gas supply station according to the present embodiment includes a base part 112 installed on the ground to load the LNG tank container T and a guide part 114 disposed on the base part 112 to guide the moving part 120. The guide part 114 is a kind of groove. More specifically, the guide part 114 is a kind of groove in which the moving part 120 is inserted and guided. The guide part 114 is provided on the base part 112 in the direction D in which the LNG tank container T is unloaded (or unloaded and loaded) from the transport unit V. Thus, when the moving part 120 moves along the guide part 114, the LNG tank container T to which moving part 120 is coupled may move from the transport unit V to the base part 112 or from the base part 112 to the transport unit V.

However, the LNG tank container T is generally very heavy. Thus, it is preferable that the LNG tank container T moves in a state in which the LNG tank container T is lifted than that in which the LNG tank container T moves as it is. For this, the moving part 120 according to the present embodiment includes a moving base 122 and a moving lifter 124 disposed on the moving base 122. The moving base 122 repeatedly moves along the guide part 114 in the direction D in which the LNG tank container T is unloaded. Also, the moving lifter 124 is separably fixed to the LNG tank container T to lift the LNG tank container T. Thus, the natural gas supply station according to the present embodiment may move the LNG tank container T through the moving base 122 in a state in which the LNG tank container T is lifted by the moving lifter 124. For reference, the moving lifter 124 may be realized as a hydraulic device. A lifter 134 that will be described later is the same.

Also, the LNG tank container T is generally very long. Thus, it is preferable that the LNG tank container T moves in a state in which both ends of the LNG tank container T in a longitudinal direction are held than that in which only one end of the LNG tank container T is held. For this, the installation structure 110 according to the present embodiment further includes a support part 130. The support part 130 is separably fixed to the LNG tank container T to move together with the moving part 120 according to the movement of the moving part 120 while supporting the LNG tank container T. For reference, 20 ft and 40 ft type LNG tank containers T are generally used. All of the 20 ft and 40 ft type LNG tank containers T may be used in the present embodiment.

More specifically, (when the LNG tank container is still loaded on the transport unit) the moving part 120 is fixed to an end of the LNG tank container T, which is disposed adjacent from the installation structure 110 in the direction D in which the LNG tank container T is unloaded from the transport unit V, and the support part 130 is fixed to an end of the LNG tank container T, which is disposed away from the installation structure 110 in the direction D in which the LNG tank container T is unloaded from the transport unit V. As described above, when the moving part 120 moves in the state in which the moving part 120 holds the rear end of the LNG tank container T, and the support part 130 holds the front end of the LNG tank container T, the LNG tank container may be more stably unloaded.

Here, the support part 130 may lift the LNG tank container T. That is, when the moving part 120 coupled to the LNG tank container moves in the state in which the moving part 120 and the support part 130 lift the LNG tank container T to the same height, the LNG tank container T may more stably move. For this, the support part 130 according to the present embodiment includes a support base 132 and a support lifter 134 disposed on the support base 132. The support base 132 moves together with the moving part 120 according to movement of the moving part 120. Also, the support lifter 134 is separably fixed to the LNG tank container T to lift the LNG tank container T.

For reference, the LNG tank container T moves by the moving part 120 in the present embodiment. That is, force for moving the LNG tank container T is generated from the moving part 120 in the present embodiment. For this, the installation structure 110 may include a power unit such as a motor for moving the moving part 120. On the other hand, the support part 130 only supports the LNG tank container T. That is, the support part 130 does not move by oneself. When the moving part 120 pulls the LNG tank container T, the support part 130 only moves together with the LNG tank container T. However, the natural gas supply station according to the present embodiment is not limited to the above-described structure. For example, power may be applied to the support part 130 to move the support part 130 through the movement of the support part 130.

However, the natural gas supply station according to the present embodiment finally supplies the natural gas to the consumer. Thus, the natural gas supply station according to the present embodiment needs to vaporize the liquefied natural gas. For this, the natural gas supply station according to the present embodiment includes a gas vaporizer 150 that receives the liquefied natural gas from the LNG tank container T to vaporize the liquefied natural gas. For reference, the natural gas supply station according to the present embodiment may include a plurality of installation structures 110. Although the plurality of installation structures 110 are provided to install a plurality of LNG tank containers T, only one gas vaporizer 150 may be provided. This is done because it is sufficient so long as one gas vaporizer 150 is connected to the plurality of LNG tank containers T through a pipe 116.

Alternatively, unlike the present embodiment, the gas vaporizer may be installed directly on the base part of the installation structure. In this case, the installation structure (the base part) may share a function for supplying the natural gas by oneself. That is, when the LNG tank container is loaded on the base part and then connected to the gas vaporizer installed on the base part, the natural gas may be supplied directly from the installation structure (the base part) to the user in a gas-consuming area. (In addition, necessary constituents for supplying the natural gas, e.g., a pressure regulator for constantly maintaining a supply pressure of the natural gas may be further installed on the base part.) In other words, the installation structure in itself may be one natural gas supply station.

Here, it is desirable to transport the base part of the installation structure together with the gas vaporizer to the gas-consuming area (the destination). When the transport is possible, the natural gas supply station may be very easily installed in the remote area to which the natural gas piping network is not directly connected by only transporting the installation structure (the base part) in which the gas vaporizer is installed up to the gas-consuming area and installing the installation structure on the gas-consuming area. That is, the natural gas supply station may be provided as one set, and then the one set of natural gas supply station is transported up to the destination and installed at the destination. Thus, the natural gas supply station may be very easily installed at a desired place.

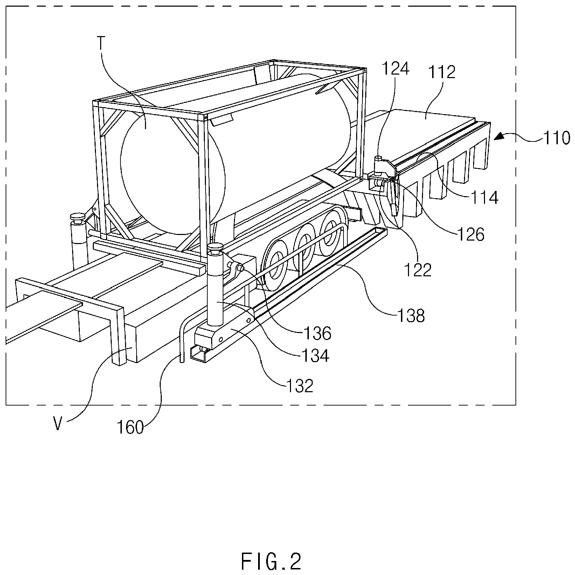

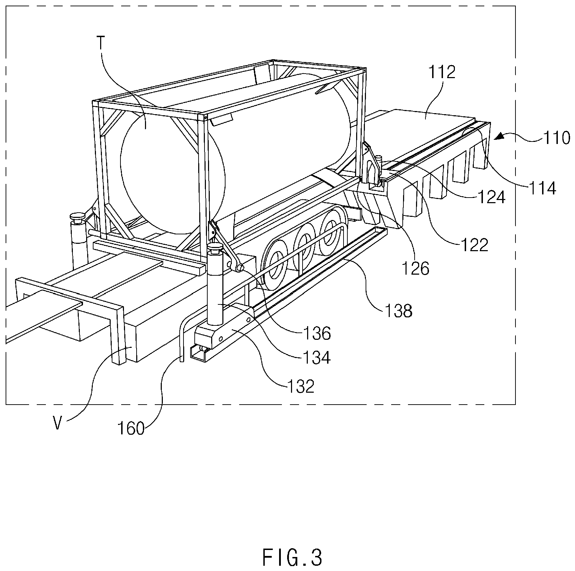

Hereinafter, an operation of the natural gas supply station according to the present embodiment will be described with reference to FIGS. 2 to 5. First, the LNG tank container T is transported to the installation structure 110 through the transport unit V such as the trailer truck. Next, as illustrated in FIG. 2, the trailer truck V moves backward to the installation structure 110. Here, the backward movement of the trailer truck V may be guided by a guide 160. Then, as illustrated in FIG. 3, the moving part 120 is fixed to a rear side of the LNG tank container T, and the support part 130 is fixed to a front side of the LNG tank container T.

Here, a hole defined in the LNG tank container T is used to fix the moving part 120 and the support part 130. In more detail, a predetermined hole for fixing is preprocessed in the LNG tank container T. The LNG tank container T is generally fixed by inserting a pin into the above-described hole. The natural gas supply station according to the present embodiment fixes the LNG tank container T by using such a hole. That is, the natural gas supply station according to the present embodiment respectively inserts a pin 126 disposed on the lifter 124 of the moving part 120 and a pin 136 disposed on the lifter 134 of the support part 130 into the holes of the LNG tank container T to fix the moving part 120 and the support part 130 to the LNG tank container T.

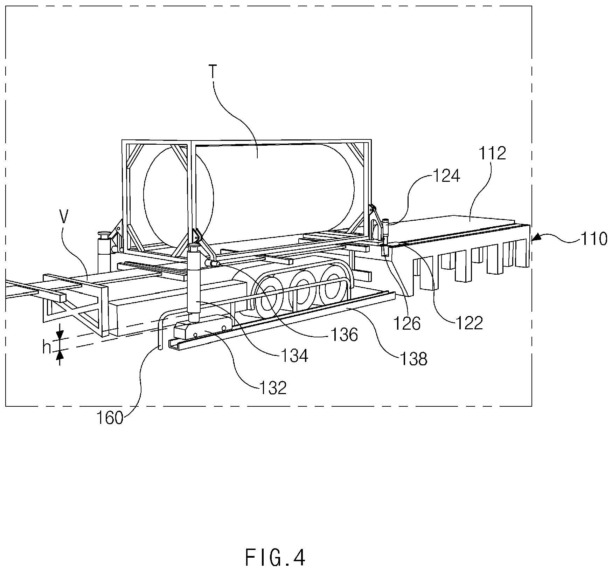

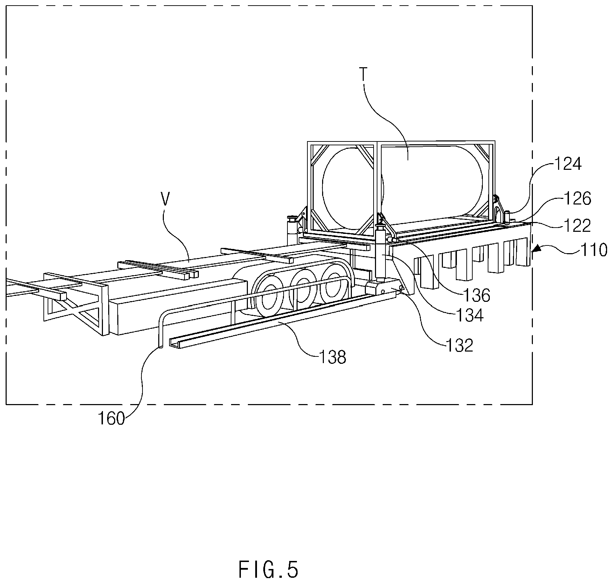

Then, as illustrated in FIG. 4, the lifter 124 of the moving part 120 and the lifter 134 of the support part 130 are driven to lift the LNG tank container T to a predetermined height h. Then, the LNG tank container T is pulled to the base 122 of the moving part 120 to install the LNG tank container T on the base part 112 of the installation structure 110 as illustrated in FIG. 5. In more detail, the LNG tank container T is pulled up to the base part 112 of the installation structure 110, and then the lifter 124 of the moving part 120 and the lifter 134 of the support part 130 are driven to seat the LNG tank container T on the base part 112 of the installation structure 110. Here, the movement of the base 122 of the moving part 120 is guided by the guide part 114 of the installation structure 110, and the movement of the base 132 of the support part 130 is guided by the guide 138.

The LNG tank container T is connected to the gas vaporizer 150 through the pipe 116. Then, the liquefied natural gas is supplied from the LNG tank container T to the gas vaporizer 150 according to user's demand. Thereafter, the liquefied natural gas is vaporized through the gas vaporizer 150 and then supplied to the consumer. Finally, when the liquefied natural gas is fully exhausted from the LNG tank container T, the LNG tank container T is loaded onto the transport unit V from the installation structure 110 in a process that is reverse to the unloading process in which the LNG tank container T is unloaded from the transport unit V to the installation structure 110. The natural gas supply station according to the present embodiment may continuously supply the natural gas to the consumer in the remote area by only unloading and loading of the LNG tank container T through a series of processes as described above.

The natural gas supply station according to the present embodiment may more conveniently supply the natural gas to the consumer in the remote area to which the natural gas piping network is not connected. That is, when the natural gas supply station according to the present embodiment is installed in the remote area to which the natural gas piping network is not connected, the natural gas may be conveniently supplied to the consumer in the remote area by only transporting the LNG tank container T up to the installation structure 110 and installing the LNG tank container T on the installation structure 110.

Also, in the natural gas supply station according to the present embodiment, since the LNG tank container T in itself serves as a storage facility, it is unnecessary to install a separate stationary tank in the remote area. For example, the natural gas supply station according to the present embodiment uses the LNG tank container T that is manufactured based on a specific standard according to the related regulation like the ISO tank. The LNG tank container T in itself may be used as the storage facility. Thus, the natural gas supply station according to the present embodiment does not need to install the separate stationary tank. In other words, the natural gas may be supplied directly to the consumer in the remote area by only installing the LNG tank container T on the installation structure 110.

In addition, since the natural gas supply station according to the present embodiment does not fill the liquefied natural gas into the storage facility in the remote area using the tank lorry according to the related art, there is no possibility of danger or loss caused by the filling. That is, while the tank lorry according to the related art only transports the liquefied natural gas to the gas-consuming area, since the LNG tank container T according to the present embodiment not only transports the liquefied natural gas to the gas-consuming area, but also is installed on the installation structure 110 disposed on the gas-consuming area to participate in the supplying of the natural gas, the supply method according to the present embodiment is different from that according to the related art.

Furthermore, since the natural gas supply station according to the present embodiment unloads the LNG tank container T from the transport unit V onto the installation structure 110, the unloading costs may be reduced when compared to the case in which the crane device is used for unloading, and also the management may be easy.

### Embodiment 2

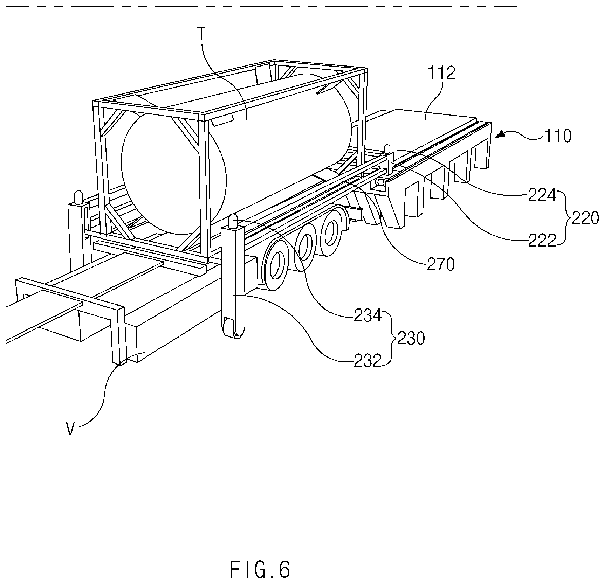

FIG. 6 is a perspective view illustrating a natural gas supply station according to Embodiment 2 of the present invention. As illustrated in FIG. 6, a natural gas supply station according to the present embodiment has constituents similar to those of the natural gas supply station according to Embodiment 1 of the present invention. However, the natural gas supply station according to the present embodiment is different from the natural gas supply station according to Embodiment 1 of the present invention in that a connection part that will be described later is provided. For reference, the same component as the component according to the foregoing embodiment is given by the same reference number, and thus, its detailed description will be omitted.

The natural gas supply station according to the present embodiment includes a moving part 220 and a support part 230, like the foregoing embodiment. In more detail, the moving part 220 includes a base 222 and a lifter 224. Also, the support part 230 also includes the base 232 and the lifter 234. Here, the moving part 220 is connected to the support part 230 through a connection part 270. That is, in the natural gas supply station according to the present embodiment, the moving part 220 and the support part 230 are integrated with each other by using the connection part 270 as a medium. When the moving part 220 and the support part 230 are integrated with each other, the moving part 220 and the support part may more stably move.

### INDUSTRIAL APPLICABILITY

The present invention relates to the natural gas supply station using the LNG tank container that is capable of conveniently and safely supplying the natural gas more to the consumer in the remote area to which the natural gas piping network is not connected and the method for supplying the natural gas using the same, and thus, industrial availability is high.

## Claims

1. A natural gas supply station comprising:
an installation structure (110) on which an LNG tank container (T) is installed; and
a gas vaporizer (150) that receives a liquefied natural gas from the LNG tank container to vaporize the liquefied natural gas,
wherein the installation structure (110) comprises:
a moving part (120) reciprocatively moving in a first direction in which the LNG tank container (T) is unloaded from a transport unit and in a second direction in which the LNG tank container (T) is loaded to the transport unit,
a base part (112) installed on the ground to load the LNG tank container (T);
a guide part (114) disposed on the base part (112) to guide the moving part (120),
and in that the moving part (120) moves the LNG tank container (T) loaded on the transport unit to the base part (112) and moves the LNG tank container (T) loaded on the base part (112) to the transport unit, by moving together with the LNG tank container (T) in the first and second directions respectively while being guided by the guide part (114), and
the gas vaporizer (150) receives the liquefied natural gas from the LNG tank container (T) installed on the base part (112) disposed at a gas-consuming area.

2. The natural gas supply station of claim 1, wherein the installation structure further comprises a support part (130) comprising:
a support base (132) moving together with the moving part (120); and
a support lifter (134) disposed on the support base (132) and lifting the LNG tank container (T).

3. The natural gas supply station of claim 2, wherein
the moving part (120) is fixed to one end of the LNG tank container (T), which is adjacent to the base part (112) in the direction in which the LNG tank container is unloaded from the transport unit, and
the support part (130) is fixed to the other end of the LNG tank container (T), which is away from the base part (112) in the direction in which the LNG tank container is unloaded from the transport unit.

4. The natural gas supply station of claim 2, further comprising:
a transport unit guide (160) guiding the transport unit to the base part (112); and
a support part guide (138) disposed adjacent to the transport unit guide (160) to guide the movement of the support part (130).

5. The natural gas supply station of claim 1, wherein the gas vaporizer (150) is installed on the base part (112).

6. The natural gas supply station of claim 5, wherein
the base part (112) is transportable up to the gas-consuming area, and
the gas vaporizer (150) is installed on the base part (112) and transportable together with the base part (112) up to the gas-consuming area.

7. The natural gas supply station of claim 1, wherein the LNG tank container (T) comprises an ISO tank.

8. A method for supplying natural gas, the method comprising:
transporting a LNG tank container (T) in which liquefied natural gas is stored to an installation structure (110) disposed at a gas-consuming area through a transport unit, the installation structure (110) comprising a moving part (120) configured to reciprocatively moving in a first direction in which the LNG tank container (T) is unloaded from the transport unit and in a second direction in which the LNG tank container (T) is loaded to the transport unit, a base part (112) installed on the ground and configured to load the LNG tank container (T), and a guide part (114) disposed on the base part (112) and configured to guide the moving part (120);
unloading the LNG tank container (T) from the transport unit to the base part (112) through the moving part (120) to install the LNG tank container (T) on the base part (112);
supplying the liquefied natural gas from the LNG tank container (T) installed on the base part (112) to a gas vaporizer (150); and
vaporizing the liquefied natural gas through the gas vaporizer (150) to supply the natural gas to a consumer,
wherein the moving part (120) moves the LNG tank container (T) loaded on the transport unit to the base part (112) and moves the LNG tank container (T) loaded on the base part (112) to the transport unit, by moving together with the LNG tank container (T) in the first and second directions respectively, while being guided by the guide part (114) .

9. The method of claim 8, further comprising loading the LNG tank container (T) from which the liquefied natural gas is fully exhausted to the transport unit through the moving part (120).

10. The method of claim 8, wherein the installation structure further comprises a support part (130) comprising:
a support base (132) moving together with the moving part (120); and
a support lifter (134) disposed on the support base (132) and lifting the LNG tank container (T).

11. The method of claim 8, wherein the LNG tank container (T) comprises an ISO tank.

## Patentansprüche

1. Eine Erdgas- Zapfsäule, die umfasst:
eine Anlagestruktur (110) auf der ein LNG- Tankcontainer (T) installiert ist; und ein Gasverdampfer (150), in den verflüssigtes Erdgas vom LNG- Tankcontainer eingespeist wird, um das verflüssigte Erdgas zu verdampfen,
wobei die Anlagestruktur (110) umfasst:
ein bewegliches Teil (120), das sich abwechselnd in eine ersten Richtung bewegt, in der der LNG- Tankcontainer (T) von einer Transporteinheit abgeladen wird und in eine zweite Richtung, in der der LNG- Tankcontainer (T) auf die Transporteinheit aufgeladen wird,
ein Basisteil (112) installiert am Boden, auf das der LNG- Tankcontainer (T) aufgeladen wird;
ein Führungsteil (114), angeordnet am Basisteil (112) um das bewegliche Teil (120) zu führen,
und wobei das bewegliche Teil (120) den auf die Transporteinheit geladenen LNG-Tankcontainer (T) zum Basisteil (112) hin bewegt und den auf dem Basisteil (112) geladenen LNG- Tankcontainer (T) zur Transporteinheit hin bewegt, indem es sich zusammen mit dem LNG- Tankcontainer (T) jeweils in die erste und zweite Richtung bewegt, während es vom Führungsteil (114) geführt wird, und
der Gasverdampfer (150) das verflüssigte Erdgas von dem auf dem Basisteil (112) installierten LNG- Tankcontainer (T), angeordnet in einem Erdgas verbrauchenden Bereich, aufnimmt.

2. Die Erdgas- Zapfsäule nach Anspruch 1, wobei die Anlagestruktur weiterhin ein Stützteil (130) enthält, das umfasst:
eine Stützbasis (132), die sich zusammen mit dem beweglichen Teil (120) bewegt; und
ein Stützheber (134), angeordnet auf der Stützbasis (132) und der den LNG-Tankcontainer (T) hebt.

3. Der Erdgas- Zapfsäule nach Anspruch 2, wobei
das bewegliche Teil (120) an einem Ende des LNG- Tankcontainers (T) festgemacht ist, das sich neben dem Basisteil (112), in der Richtung, in der der LNG-Tankcontainer von der Transporteinheit abgeladen wird, befindet und
das Stützteil (130) am anderen Ende des LNG- Tankcontainers (T) festgemacht ist, das vom Basisteil (112) in der Richtung, in der der LNG- Tankcontainer von der Transporteinheit abgeladen wird, entfernt liegt.

4. Die Erdgas- Zapfsäule nach Anspruch 2, weiterhin umfassend:
eine Transporteinheitsführung (160), die die Transporteinheit zum Basisteil (112) führt; und
eine Stützteilführung (138), angeordnet neben der Transporteinheitsführung (160), um die Bewegung des Stützteils (130) zu führen.

5. Die Erdgas- Zapfsäule nach Anspruch 1, wobei der Gasverdampfer (150) auf dem Basisteil (112) installiert ist.

6. Der Erdgas- Zapfsäule nach Anspruch 5, wobei
das Basisteil (112) zum Erdgas verbrauchenden Bereich, transportiert werden kann, und
der Gasverdampfer (150) auf dem Basisteil (112) installiert ist und zusammen mit dem Basisteil (112) zum Erdgas verbrauchenden Bereich transportiert werden kann.

7. Die Erdgas- Zapfsäule nach Anspruch 1, wobei der LNG- Tankcontainer (T) einen ISO- Tank umfasst.

8. Ein Verfahren zur Lieferung von Erdgas, wobei das Verfahren umfasst:
Transport eines LNG- Tankcontainers (T), in dem verflüssigtes Erdgas gelagert ist, zu einer Anlagestruktur (110), die sich in einem Erdgas verbrauchenden Bereich befindet, mittels einer Transporteinheit, die Anlagestruktur (110) umfasst dabei ein bewegliches Teil (120), das sich abwechselnd in eine erste Richtung bewegt, in der der LNG- Tankcontainer (T) von einer Transporteinheit abgeladen wird und in eine zweite Richtung, in der der LNG- Tankcontainer (T) auf die Transporteinheit aufgeladen wird, ein am Boden installiertes Basisteil (112), um den LNG-Tankcontainer (T) zu laden und ein Führungsteil (114), angeordnet am Basisteil (112), um das bewegliche Teil (120) zu führen;
Abladen des LNG- Tankcontainers (T) von der Transporteinheit auf das Basisteil (112) mittels des beweglichen Teils (120) um den LNG- Tankcontainer (T) auf das Basisteil (112) zu stellen;
Lieferung des verflüssigten Erdgases von dem auf dem Basisteil (112) installierten LNG- Tankcontainer (T) an einen Gasverdampfer (150); und
Verdampfen des verflüssigten Erdgases mittels des Gasverdampfers (150) um das Erdgas an einen Verbraucher zu liefern,
wobei das bewegliche Teil (120) den auf die Transporteinheit geladenen LNG-Tankcontainer (T) zum Basisteil (112) hin bewegt und den auf das Basisteil (112) geladenen LNG- Tankcontainer (T) zur Transporteinheit hin bewegt, indem es sich zusammen mit dem LNG- Tankcontainer (T) jeweils in die erste und zweite Richtung bewegt, während es vom Führungsteil (114) geführt wird.

9. Das Verfahren nach Anspruch 8, das weiterhin umfasst, den LNG-Tankcontainer (T) aus dem das verflüssigte Erdgas vollständig abgepumpt wurde mittels des beweglichen Teils (120) auf die Transporteinheit zu laden

10. Das Verfahren nach Anspruch 8, wobei die Anlagestruktur weiterhin ein Stützteil (130) enthält, das umfasst:
eine Stützbasis (132), die sich zusammen mit dem beweglichen Teil (120) bewegt; und
einen Stützheber (134), angeordnet auf der Stützbasis (132), zum Heben des LNG-Tankcontainers (T).

11. Das Verfahren nach Anspruch 8, wobei der LNG- Tankcontainer (T) einen ISO-Tank umfasst.

## Revendications

1. Station d'alimentation en gaz naturel comprenant :
une structure d'installation (110) sur laquelle un conteneur-citerne de GNL (T) est installé ; et
un vaporisateur de gaz (150) qui reçoit un gaz naturel liquéfié à partir du conteneur-citerne de GNL pour vaporiser le gaz naturel liquéfié,
dans laquelle la structure d'installation (110) comprend :
une partie mobile (120) se déplaçant en va-et-vient dans une première direction dans laquelle le conteneur-citerne de GNL (T) est déchargé à partir d'une unité de transport et dans une seconde direction dans laquelle le conteneur-citerne de GNL (T) est chargé sur l'unité de transport,
une partie de base (112) installée au sol pour charger le conteneur-citerne de GNL (T) ;
une partie de guidage (114) disposée sur la partie de base (112) pour guider la partie mobile (120),
et en ce que la partie mobile (120) déplace le conteneur-citerne de GNL (T) chargé sur l'unité de transport vers la partie de base (112) et déplace le conteneur-citerne de GNL (T) chargé sur la partie de base (112) vers l'unité de transport, en se déplaçant conjointement avec le conteneur-citerne de GNL (T) dans les première et seconde directions respectivement tout en étant guidés par la partie de guidage (114), et
le vaporisateur de gaz (150) reçoit le gaz naturel liquéfié à partir du conteneur-citerne de GNL (T) installé sur la partie de base (112) disposée dans une zone de consommation de gaz.

2. Station d'alimentation en gaz naturel selon la revendication 1, dans laquelle la structure d'installation comprend en outre une partie de support (130) comprenant :
une base de support (132) se déplaçant avec la partie mobile (120) ; et
un élévateur de support (134) disposé sur la base de support (132) et soulevant le conteneur-citerne de GNL (T).

3. Station d'alimentation en gaz naturel selon la revendication 2, dans laquelle
la partie mobile (120) est fixée à une première extrémité du conteneur-citerne de GNL (T), qui est adjacente à la partie de base (112) dans la direction dans laquelle le conteneur-citerne de GNL est déchargé à partir de l'unité de transport, et
la partie de support (130) est fixée à l'autre extrémité du conteneur-citerne de GNL (T), qui est éloignée de la partie de base (112) dans la direction dans laquelle le conteneur-citerne de GNL est déchargé à partir de l'unité de transport.

4. Station d'alimentation en gaz naturel selon la revendication 2, comprenant en outre :
un guide d'unité de transport (160) guidant l'unité de transport vers la partie de base (112) ; et
un guide de pièce de support (138) disposé adjacent au guide d'unité de transport (160) pour guider le déplacement de la partie de support (130).

5. Station d'alimentation en gaz naturel selon la revendication 1, dans laquelle le vaporisateur de gaz (150) est installé sur la partie de base (112).

6. Station d'alimentation en gaz naturel selon la revendication 5, dans laquelle
la partie de base (112) peut être transportée jusqu'à la zone de consommation de gaz, et
le vaporisateur de gaz (150) est installé sur la partie de base (112) et peut être transporté avec la partie de base (112) jusqu'à la zone de consommation de gaz.

7. Station d'alimentation en gaz naturel selon la revendication 1, dans laquelle le conteneur-citerne de GNL (T) comprend un conteneur-citerne ISO.

8. Méthode de fourniture de gaz naturel, la méthode comprenant les étapes consistant à :
transporter un conteneur-citerne de GNL (T) dans lequel du gaz naturel liquéfié est stocké vers une structure d'installation (110) disposée dans une zone de consommation de gaz à travers une unité de transport, la structure d'installation (110) comprenant une partie mobile (120) configurée pour se déplacer en va-et-vient dans une première direction dans laquelle le conteneur-citerne de GNL (T) est déchargé à partir de l'unité de transport et dans une seconde direction dans laquelle le conteneur-citerne de GNL (T) est chargé sur l'unité de transport, une partie de base (112) installée au sol et configurée pour charger le conteneur-citerne de GNL (T), et une partie de guidage (114) disposée sur la partie de base (112) et configurée pour guider la partie mobile (120) ;
décharger le conteneur-citerne de GNL (T) à partir de l'unité de transport vers la partie de base (112) à travers la partie mobile (120) pour installer le conteneur-citerne de GNL (T) sur la partie de base (112) ;
fournir le gaz naturel liquéfié à partir du conteneur-citerne de GNL (T) installé sur la partie de base (112) à un vaporisateur de gaz (150) ; et
vaporiser le gaz naturel liquéfié à travers le vaporisateur de gaz (150) pour fournir le gaz naturel à un consommateur,
dans laquelle la partie mobile (120) déplace le conteneur-citerne de GNL (T) chargé sur l'unité de transport vers la partie de base (112) et déplace le conteneur-citerne de GNL (T) chargé sur la partie de base (112) vers l'unité de transport, en se déplaçant conjointement avec le conteneur-citerne de GNL (T) dans les première et seconde directions respectivement, tout en étant guidés par la partie de guidage (114).

9. Méthode selon la revendication 8, comprenant en outre le chargement du conteneur-citerne de GNL (T) à partir duquel le gaz naturel liquéfié est entièrement évacué sur l'unité de transport à travers la partie mobile (120).

10. Méthode selon la revendication 8, dans laquelle la structure d'installation comprend en outre une partie de support (130) comprenant :
une base de support (132) se déplaçant avec la partie mobile (120) ; et
un élévateur de support (134) disposé sur la base de support (132) et soulevant le conteneur-citerne de GNL (T).

11. Méthode selon la revendication 8, dans laquelle le conteneur-citerne de GNL (T) comprend un conteneur-citerne ISO.
